# EUROPEAN PATENT SPECIFICATION

(11) **EP 4 020 670 B1**
(45) Date of publication and mention of the grant of the patent: **24.09.2025**
(21) Application number: 21853842.9
(22) Date of filing: 23.06.2021
(51) Int. Cl.: H01M 10/6554, H01M 10/6556, H01M 10/613, H01M 50/20, H01M 10/625

(54) **BATTERY MODULE HAVING IMPROVED FASTENING OF COOLING PLATE USING REINFORCEMENT BEAM, AND BATTERY PACK COMPRISING SAME**
BATTERIEMODUL, DAS EINE VERBESSERTE BEFESTIGUNG EINER KÜHLPLATTE AUFWEIST, UNTER VERWENDUNG EINES VERSTÄRKUNGSTRÄGERS UND BATTERIESATZ, DER DENSELBEN UMFASST
MODULE DE BATTERIE AYANT UNE FIXATION AMÉLIORÉE DE PLAQUE DE REFROIDISSEMENT À L'AIDE D'UNE POUTRE DE RENFORCEMENT ET BLOC-BATTERIE LE COMPRENANT

(30) Priority: 07.08.2020 KR 20200099340
(43) Date of publication of application: 29.06.2022
(73) Proprietor: LG ENERGY SOLUTION, LTD., Seoul 07335 (KR)
(72) Inventor: CHOI, Gi Young, Daejeon 34122 (KR); LEE, Su Hang, Daejeon 34122 (KR); KIM, Jae Yeong, Daejeon 34122 (KR); KIM, Yong Il, Daejeon 34122 (KR); KIM, Dong Wook, Daejeon 34122 (KR)
(74) Representative: Plasseraud IP
(86) International application number: PCT/KR2021/007851
(87) International publication number: WO 2022/030755

(56) References cited:
- WO-A1-2019/197338
- DE-A1- 102015 111 749
- JP-A- 2020 068 070
- KR-A- 20180 044 083
- KR-A- 20190 026 682
- KR-A- 20190 089 121
- KR-A- 20200 008 624
- US-A1- 2019 131 596
- US-B2- 10 522 803

## Description

### [Technical Field]

This application claims the benefit of priority based on Korean Patent Application No. 10-2020-0099340, filed on August 7, 2020.

The present invention relates to a battery module with an improved fastening of a cooling plate, and a battery pack including the same.

### [Background Art]

As technologies about mobile devices, electric vehicles, hybrid cars, power storage devices, and uninterruptible power supplies are developed and their demands increase, the demand for secondary batteries as energy sources increases rapidly. As such, many studies have been conducted on batteries that can respond to various needs.

Typically, the demand for prismatic or pouch type secondary batteries is high in terms of the shape of batteries, and the demand for lithium-based secondary batteries having a high energy density and discharge capacity per unit time is high in terms of the material of batteries. The secondary battery is applied as a power source for an electric vehicle, etc. in the form of a battery module which is generated by modularizing a plurality of battery cells, or a battery pack which is generated by packaging a plurality of battery modules.

One of the major research tasks in these secondary batteries is to improve safety of a battery module. The temperature of the secondary battery increases in the charge/discharge process, and the increased temperature may cause the ignition of the battery module.

One of the methods for suppressing the temperature rise of the battery module is to fasten a cooling plate at the side surface of the battery module. The cooling plate has a structure where a flow path is formed, and the temperature of the battery module is lowered through the movement of the cooled fluid through the flow path.

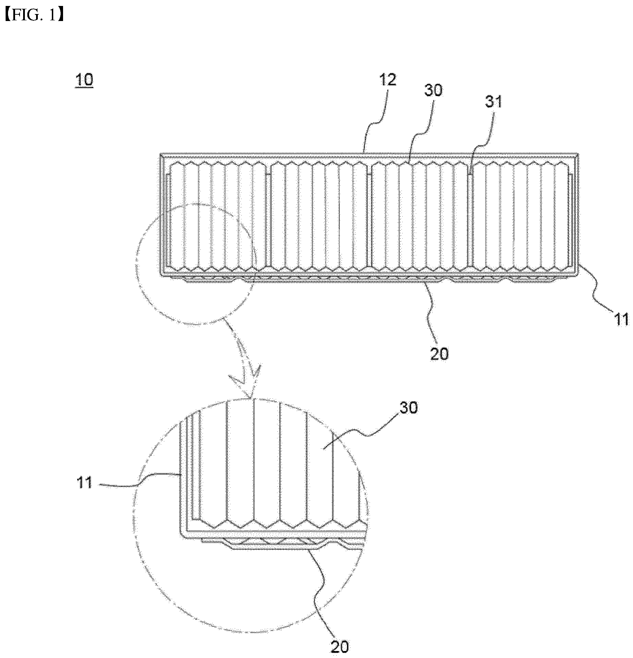

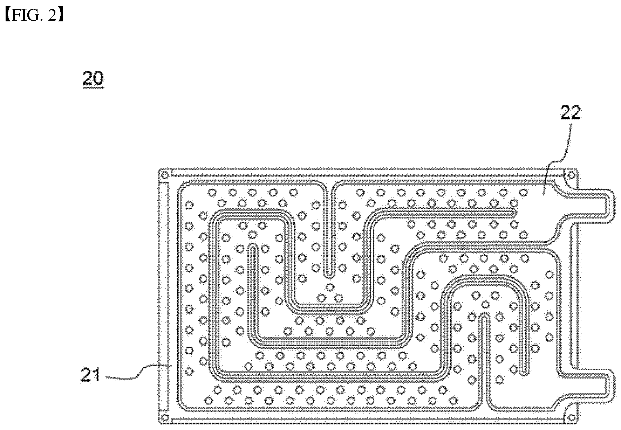

Generally, the cooling plate is fastened to the outer surface of the battery module through welding such as soldering. FIGS. 1 and 2 are views illustrating a cross-section of a battery module showing a fastening structure of a cooling plate, and a plane structure of a cooling plate according to a conventional art.

First, referring to FIG. 1, a conventional battery module 10 includes a U-shaped frame 11 and a top plate 12 which covers the open upper surface of the U-shaped frame 11, and a plurality of battery cells 30 are accommodated in the U-shaped frame 11. In FIG. 1, the battery cells 30 are arranged and accommodated in a vertical direction, and buffer pads 31 are positioned between the battery cells 30 with a certain distance. Further, the cooling plate 20 is fastened to the outer peripheral surface at the lower portion of the U-shaped frame 11 by a braze.

Referring to FIG. 2, the cooling plate 20 is plate-shaped, and has a structure in which a flow path for a fluid movement has been formed. The cooling plate 20 is fastened to the outer peripheral surface of the lower portion of the U-shaped frame 11 by brazing.

However, in such a conventional battery module 10, a welded portion for fastening the cooling plate 20 may be broken due to the swelling phenomenon of the battery cell 30 generated during the charge/discharge process, an external shock or a rapid temperature change, etc. If a part or the whole of the welded portion is broken, the cooling plate 20 will be closely attached to the outer surface of the module frame. If the cooling plate is not closely attached to the module frame, the cooling effect on the battery module rapidly decreases.

Therefore, there is a need for a technology for a battery module having a new structure for maintaining the fastening stability of the cooling plate and enhancing the adhesion.

Documents DE 10 2015 111749 A1, KR 2019 0026682 A, US 2019/131596 A1 and US 10 522 803 B2 disclose battery modules comprising cooling plates.

### [Prior art literature]

### [Patent Document]

Korea Patent Publication No. 2018-0047383

### [Disclosure]

### [Technical Problem]

The present invention is believed to solve at least some of the above problems. For example, an aspect of the present invention provides a battery module having improved the fastening of a cooling plate by using welding as well as a reinforcement beam, and a battery pack including the battery module.

### [Technical Solution]

The present invention provides a battery module to which a cooling plate is fastened. The battery module according to the present invention includes: at least one battery cell; a module case having a receiving portion for accommodating the at least one battery cell therein; and a cooling plate formed at an external side of one surface of the module case, wherein the module case is fastened with the cooling plate by welding and a reinforcement beam. The reinforcement beam penetrates one surface of the module case and the cooling plate to be fastened.

In one example, the cooling plate has a plate-shaped structure having a flexural structure for forming a fluid-move path.

In one specific example, the cooling plate includes a fluid-move path at an inner side contacting the module case, an outer peripheral surface at an opposite side of a surface contacting the module case has a flexural structure including a separation region spaced apart from the module case, and an adhesion region attached to the module case, and the fastening by the welding and the reinforcement beam is formed at the adhesion region of the cooling plate.

In another specific example, the reinforcement beam is fastened along an edge region of the cooling plate.

For example, a cross-section of the reinforcement beam has a H-shaped beam structure.

In one example, in the welding, the module case is fastened with the cooling plate by a braze.

The reinforcement beam penetrates one surface of each of the module case and the cooling plate, and the welding is performed by filling an empty space between the reinforcement beam and each through hole of the module case and the cooling plate.

In one example, the battery cell is oriented in a direction perpendicular to the cooling plate and is accommodated in a receiving portion of the module case.

In one specific example, the module case includes: a U-shaped frame having a structure which covers a lower surface and opposite side surfaces of the receiving portion; and a top plate which covers an upper surface of the U-shaped frame.

For example, the module case includes a U-shaped frame having a structure which covers a lower surface and both side surfaces of the receiving portion, and the cooling plate is fastened at an external side of the lower surface of the U-shaped frame.

In another specific example, the module case includes: a bottom plate which forms a lower surface of the receiving portion; and a U-shaped frame having a structure which covers an upper surface and both side surfaces of the receiving portion, wherein the cooling plate is fastened at an external side of a lower surface of the bottom plate.

In one example, the module case further includes an end plate which covers an open side surface of the U-shaped frame.

The present invention further provides a battery pack including the above-described battery module. In one example, a battery pack according to the present invention includes at least one battery module described above; and a pack case for packaging the battery module.

### [Advantageous Effects]

The battery module according to the present invention effectively prevents separation of the cooling plate from an external impact or the swelling the battery cell by improving the fastening of the cooling plate.

### [Brief Description of the Drawings]

FIG. 1 is a cross-sectional view of a battery module showing a fastening structure of a conventional cooling plate.
FIG. 2 is a view showing a plane structure of a conventional cooling plate.
FIG. 3 is a cross-sectional view of a battery module showing a fastening structure of a cooling plate according to one embodiment of the present invention.
FIG. 4 is a view illustrating a plane structure of a cooling plate according to one embodiment of the present invention.
FIG. 5 is a perspective view of a battery module according to another embodiment of the present invention.

### [Detailed Description of the Preferred Embodiments]

As the inventive concept allows for various changes and numerous embodiments, particular embodiments will be illustrated in the drawings and described in detail in the text. However, this is not intended to limit the present invention to the specific form disclosed.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

The present invention relates to a battery module, and the battery module includes a cooling plate fastened to one surface, and the cooling plate is fastened by using both welding and a reinforcement beam. The battery module according to the present invention includes: at least one battery cell; a module case having a receiving portion for accommodating the battery cell therein; and a cooling plate formed at an external side of one surface of the module case, wherein the module case is fastened with the cooling plate by welding or a reinforcement beam.

The module case is fastened to the cooling plate by a reinforcement beam which penetrates one surface of the module case and the cooling plate.

The present invention is characterized in that both welding and a reinforcement beam are used to fasten the module case with the cooling plate. In the past, the cooling plate was fastened with the module case using soldering, but in this case, the welded portion was damaged or separated. In addition, when the reinforcement beam is applied alone, it was difficult to implement the adhesion between the module case and the cooling plate. The present invention can strongly fasten the module case with the cooling plate by using a reinforcement beam and implement excellent adhesion through welding.

The reinforcement beam penetrates one surface of the module case and the cooling plate to be fastened. In the present invention, holes are formed on one surface of the module case and the cooling plate, and the reinforcement beam penetrates the holes. In addition, an empty space between the reinforcement beam and the holes of the module case and the cooling plate is filled by welding. As such, in the present invention, a dual fastening structure is formed between the module case and the cooling plate, and excellent airtightness can be implemented without being influenced by a change in external or internal conditions.

In one example, the cooling plate has a plate-shaped structure having a flexural structure for forming a fluid-move path. The cooling plate has a plate-shaped structure, and a flexural structure forming a flow path is formed in the plate-shaped structure. However, in the present invention, the shape of the cooling plate is not limited to a plate shape. For example, the cooling plate may be bent to cover 2 to 4 surfaces of the battery module. However, in order to minimize the increase in weight or volume due to the formation of the cooling plate or to implement cooling effects above a certain level, it is efficient to form a cooling plate of a plate-shaped structure on one surface of the battery module.

In one specific example, the cooling plate includes a fluid-move path at an inner side contacting the module case, an outer peripheral surface at an opposite side of a surface contacting the module case has a flexural structure including a separation region spaced apart from the module case, and an adhesion region closely attached to the module case, and the fastening by the welding and the reinforcement beam is formed at the adhesion region of the cooling plate. The cooling plate has a flexural structure by formation of a flow path, and a certain region, where a flow path is not formed, has an adhesion region, where a flexural structure is not formed, to be closely attached to the module case. The module case can be fastened with the cooling plate by applying welding and reinforcement beams to the adhesion region. Further, when the reinforcement beam is fastened on the adhesion region, it is possible to allow the fastened reinforcement beam not to protrude from the surface of the cooling plate.

In another specific example, the reinforcement beam is fastened along an edge region of the cooling plate. The position, where the reinforcement beam is fastened, is not particularly, limited, but it is advantageous to include the edge region of the cooling plate. For example, when the cooling plate has a plate structure of a quadrangle, the reinforcement beam can be formed along 4 sides.

For example, a cross-section of the reinforcement beam has a H-shaped beam structure. The module case is fastened with the cooling plate in a state that the reinforcement beam has penetrated the module case and the cooling plate. The central portion is narrow in width, and the upper and lower ends are wide in width. As such, the module case can be effectively fastened with the cooling plate using a H-shaped reinforcement beam.

In one example, in the welding, the module case is fastened with the cooling plate by a braze. In the present invention, the welding refers to any kind of metallurgical joining method of metal and includes all cases of joining two different materials by melting or heating metal materials. In the present invention, the welding includes brazing, welding, and/or soldering. Specifically, the welding can be performed in a brazing scheme. In the brazing, the base material and the filler material are joined by melting only the filler material without melting the base material by heating the joint. For example, in the brazing, filler materials are heated at a temperature of 450°C or more. Only the filler materials are melted without melting the base materials, so that the two base materials may be joined by filling the narrow gap between the two base materials by using spreadability, wettability and capillarity of the melted metal.

The reinforcement beam penetrates one surface of the module case and the cooling plate to be fastened, and the welding is performed by filling an empty space between the reinforcement beam and each through hole of the module case and the cooling plate. In the present invention, the battery module is fastened with the cooling plate through a reinforcement beam, and the fastening is reinforced by welding. For example, the welding can be performed in a scheme such as brazing.

In one example, the battery cell is oriented in a direction perpendicular to the cooling plate and is accommodated in a receiving portion of the module case. If battery cells are accommodated in a direction parallel to the cooling plate, only the battery cells adjacent to the cooling plate are cooled intensively, and thus the temperature imbalance between battery cells in the battery module may be caused. In the present invention, by accommodating battery cells in a direction perpendicular to the cooling plate, it is possible to quickly cool battery cells through the interface between the battery cells while minimizing the temperature variation between the battery cells in the battery module.

In one specific example, the module case includes: a U-shaped frame having a structure which covers a lower surface and both side surfaces of the receiving portion; and a top plate which covers an upper surface of the U-shaped frame. For example, the module case includes a U-shaped frame having a structure which covers a lower surface and both side surfaces of the receiving portion, and the cooling plate is fastened at an external side of the lower surface of the U-shaped frame. The module case according to the present invention may have a frame having a structure surrounded by 4 surfaces. However, a structure having a top plate and a U-shaped frame is preferred in consideration of the convenience of accommodating battery cells and the easiness of joining the cooling plate.

In another specific example, the module case includes: a bottom plate which forms a lower surface of the receiving portion; and a U-shaped frame having a structure which covers an upper surface and both side surfaces of the receiving portion, wherein the cooling plate is fastened at an external side of the lower surface of the bottom plate. As another example of a module case according to the present invention, battery cells are positioned on the bottom plate, which is covered by a U-shaped frame. It is possible to be assembled in a form that a cooling plate is fastened on the outer surface of the lower portion of the bottom plate, and battery cells are accommodated at the inner side surface, which are then covered by a U-shaped frame.

In one example, the module case further includes an end plate which covers an end plate which covers an open side surface of the U-shaped frame. For example, an end plate having a PCM, etc. mounted thereon may be fastened on the open side surface of the U-shaped frame. The end plate may be formed on one or both surfaces.

The present invention further provides a battery pack including the above-described battery module. In one example, a battery pack according to the present invention includes at least one battery module described above; and a pack case for packaging the battery module. The battery pack is variously applicable as a power source of the vehicle. For example, it is applicable as a power source of a mild hybrid vehicle, a plug-in hybrid vehicle or an electric vehicle, etc.

### [Detailed Description of the Preferred Embodiments]

Hereinafter, the present invention will be described in more detail through drawings and the like. In describing the drawings, similar reference numerals are used for similar elements. In the accompanying drawings, the dimensions of the structures are shown in an enlarged scale for clarity of the invention. Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

### (First embodiment)

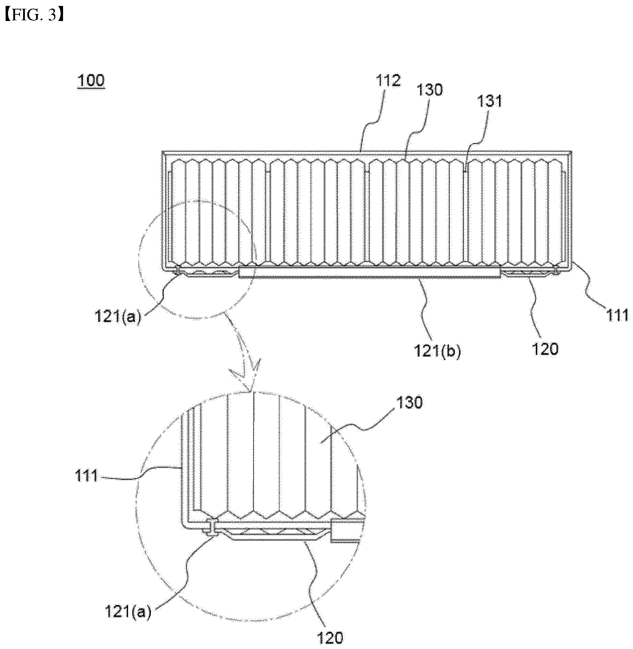

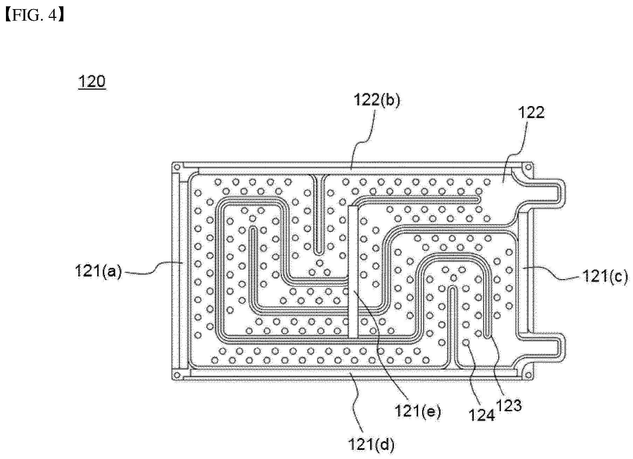

FIG. 3 is a cross-sectional view of a battery module showing a fastening structure of a cooling plate according to one embodiment of the present invention, and FIG. 4 is a view illustrating a plane structure of a cooling plate according to one embodiment of the present invention.

First, referring to FIG. 3, a battery module 100 according to the present invention includes: a plurality of battery cells 130; a module case having a receiving portion for accommodating the battery cells 130 therein; and a cooling plate 120 formed at an external side of one surface of the module case. The module case includes a U-shaped frame 111 and a top plate 112 which covers the open upper surface of the U-shaped frame 111. A plurality of battery cells 130 are accommodated in the receiving portion in the U-shaped frame 111, and buffer pads 131 are positioned between the battery cells 130 with a certain distance. The top surface 112 is fastened on the open upper surface of the U-shaped frame 111.

Further, the cooling plate 120 is fastened on the outer peripheral surface of the lower portion of the U-shaped frame 111. The outer peripheral surface of the lower portion of the U-shaped frame 111 is fastened with the cooling plate 120 by H-shaped reinforcement beams 121(a) and 121(b), and the fastened portion is filled by a braze.

Referring to FIG. 4, the shape of the cooling plate 120 and the positions where the reinforcement beams 121(a) to 121(e) are formed in the present invention are shown. Referring to FIG. 4, the cooling plate 120 is plate-shaped, and has a structure in which a flow path 122 for a fluid movement has been formed. The flow path 122 has a form surrounded by linear irregularities 123 and edge irregularities of the cooling plate 120, and dot-type irregularities 124 are formed at the region where the flow path is formed, to thereby supplement the mechanical strength.

The cooling plate 120 has a plate-shaped structure of 4 angles, reinforcement beams 121(a) to 121(d) are formed along 4 sides, respectively, and an additional reinforcement beam 121(e) is formed at the central portion. Each of the reinforcement beams 121(a) to 121(e) has a H-shaped beam structure. Herein, the central portion having a small width penetrates the bottom surface of the U-shaped frame 111 and the cooling plate 120, and both ends having a large width protrude from the front and rear sides of the penetrated regions.

Further, the portions fastened by the reinforcement beams 121(a) to 121(e) are filled by a braze so that there is no empty space. In the present invention, as the U-shaped frame 111 is fastened with the cooling plate using reinforcement beams 121(a) to 121(e), and the fastened portion is filled by a braze, the mechanical strength is reinforced, and the adhesion of the cooling plate 120 may be maintained even when there is an internal or external shock or a temperature change.

### (Second embodiment)

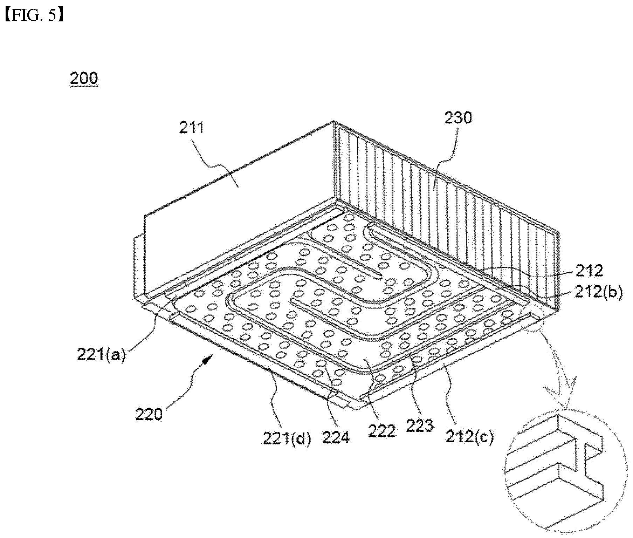

FIG. 5 is a perspective view of a battery module according to another embodiment of the present invention. Referring to FIG. 5, a battery module 200 according to the present invention has a structure in which a plurality of battery cells 230 are accommodated in a battery case, and a cooling plate 220 is fastened on the lower surface. The module case includes: a bottom plate 212 which forms a lower surface of a receiving portion; and a U-shaped frame 211 which covers the upper surface and both side surfaces of the receiving portion, and the cooling plate 220 is fastened at an external side of the lower surface of the bottom plate 212.

The cooling plate 220 is plate-shaped, and has a structure in which a flow path 222 for a fluid movement has been formed. The flow path 222 has a form surrounded by linear irregularities 223 and edge irregularities of the cooling plate 220, and dot-type irregularities 224 are formed at the region where the flow path is formed, to thereby supplement the mechanical strength.

The cooling plate 220 has a plate-shaped structure of 4 angles, and reinforcement beams 221(a) to 221(d) are formed along 4 sides, respectively. Each of the reinforcement beams 221(a) to 221(d) has a H-shaped beam structure. Herein, the central portion having a small width penetrates the bottom plate 211 and the cooling plate 220, and both ends having a large width protrude from the front and rear sides of the penetrated regions.

Further, the portions fastened by the reinforcement beams 221(a) to 221(d) are filled by a braze so that there is no empty space. By filling the fastened portion by a braze, the mechanical strength is reinforced, and the adhesion of the cooling plate 220 may be maintained even when there is an internal or external impact or a temperature change.

In the above, the present invention has been described in more detail through the drawings and examples. Accordingly, the embodiments described in the specification and the configurations described in the drawings are only the most preferred embodiments of the present invention, and do not represent all of the technical ideas of the present invention.

### [Description of reference numerals]

10, 100, 200: battery module
11, 111, 211: U-shaped frame
12, 112: top plate
20, 120, 220: cooling plate
21: welded portion
22, 222: flow path
123, 223: linear irregularities
124, 224: dot-type irregularities
30, 130, 230: battery cell
31, 131: buffer pad
121(a), 121(b), 121(c), 121(d), 121(e), 212(a), 212(b), 212(c), 212(d): reinforcement beam
122: flow path
212: bottom plate

## Claims

1. A battery module (100; 200) comprising:
at least one battery cell (130; 230);
a module case having a receiving portion for accommodating the at least one battery cell (130; 230) therein; and
a cooling plate (120; 220) formed at an external side of one surface of the module case,
wherein the module case is fastened with the cooling plate (120; 220) by welding and a reinforcement beam (121(a), 121(b), 121(c), 121(d), 121(e); 212(a), 212(b), 212(c), 212(d)),
wherein the reinforcement beam (121(a), 121(b), 121(c), 121(d), 121(e); 212(a), 212(b), 212(c), 212(d)) penetrates one surface of each of the module case and the cooling plate (120; 220), and
wherein the welding is performed by filling an empty space between the reinforcement beam (121(a), 121(b), 121(c), 121(d), 121(e); 212(a), 212(b), 212(c), 212(d)) and each through hole of the module case and the cooling plate (120; 220).

2. The battery module (100; 200) of claim 1, wherein the cooling plate (120; 220) has a plate-shaped structure having a flexural structure for forming a fluid-move path.

3. The battery module (100; 200) of claim 1, wherein the cooling plate (120; 220) includes a fluid-move path at an inner side contacting the module case,
wherein an outer peripheral surface at an opposite side of a surface contacting the module case has a flexural structure including a separation region spaced apart from the module case, and an adhesion region attached to the module case, and
wherein the fastening by the welding and the reinforcement beam is formed at the adhesion region of the cooling plate (120; 220).

4. The battery module (100; 200) of claim 1, wherein the reinforcement beam (121(a), 121(b), 121(c), 121(d); 212(a), 212(b), 212(c), 212(d)) is fastened along an edge region of the cooling plate.

5. The battery module (100; 200) of claim 1, wherein a cross-section of the reinforcement beam (121(a), 121(b), 121(c), 121(d), 121(e); 212(a), 212(b), 212(c), 212(d)) has a H-shaped beam structure.

6. The battery module (100; 200) of claim 1, wherein in the welding, the module case is fastened with the cooling plate (120; 220) by a braze.

7. The battery module (100; 200) of claim 1, wherein the at least one battery cell (130; 230) is oriented in a direction perpendicular to the cooling plate (120; 220).

8. The battery module (100) of claim 1, wherein the module case includes:
a U-shaped frame (111) having a structure which covers a lower surface and opposite side surfaces of the receiving portion; and
a top plate (112) which covers an upper surface of the U-shaped frame (111).

9. The battery module of claim 8, wherein the module case includes a U-shaped frame having (111) a structure which covers a lower surface and opposite side surfaces of the receiving portion, and
wherein the cooling plate (120) is fastened at an external side of the lower surface of the U-shaped frame (111).

10. The battery module (200) of claim 1, wherein the module case includes:
a bottom plate (212) which forms a lower surface of the receiving portion; and
a U-shaped frame (211) having a structure which covers an upper surface and both side surfaces of the receiving portion,
wherein the cooling plate (220) is fastened at an external side of a lower surface of the bottom plate (212).

11. The battery module (100) of claim 8, wherein the module case further includes an end plate which covers an open side surface of the U-shaped frame (111).

12. A battery pack comprising the battery module (100; 200) according to claim 1.

## Patentansprüche

1. Batteriemodul (100; 200), umfassend:
wenigstens eine Batteriezelle (130; 230);
ein Modulgehäuse, welches einen Aufnahmeabschnitt zum Aufnehmen der wenigstens einen Batteriezelle (130; 230) darin aufweist; und
eine Kühlplatte (120; 220), welche an einer äußeren Seite einer Fläche des Modulgehäuses gebildet ist,
wobei das Modulgehäuse durch Schweißen und eine Verstärkungsstrebe (121(a), 121(b), 121(c), 121(d), 121(e); 212(a), 212(b), 212(c), 212(d)) an der Kühlplatte (120; 220) befestigt ist,
wobei die Verstärkungsstrebe (121(a), 121(b), 121(c), 121(d), 121(e); 212(a), 212(b), 212(c), 212(d)) eine Fläche jedes des Modulgehäuses und der Kühlplatte (120; 220) durchdringt und
wobei das Schweißen durch Füllen eines leeren Raums zwischen der Verstärkungsstrebe (121(a), 121(b), 121(c), 121(d), 121(e); 212(a), 212(b), 212(c), 212(d)) und jedem Durchgangsloch des Modulgehäuses und der Kühlplatte (120; 220) durchgeführt wird.

2. Batteriemodul (100; 200) nach Anspruch 1, wobei die Kühlplatte (120; 220) eine plattenförmige Struktur aufweist, welche eine biegefeste Struktur zum Bilden eines Fluidbewegungspfads aufweist.

3. Batteriemodul (100; 200) nach Anspruch 1, wobei die Kühlplatte (120; 220) an einer inneren Seite, welche das Modulgehäuse kontaktiert, einen Fluidbewegungspfad umfasst,
wobei eine äußere periphere Fläche an einer entgegengesetzten Seite einer Fläche, welche das Modulgehäuse kontaktiert, eine biegefeste Struktur aufweist, welche einen Trennbereich, welcher von dem Modulgehäuse beabstandet ist, und einen Adhäsionsbereich umfasst, welcher an dem Modulgehäuse angebracht ist, und
wobei die Befestigung durch das Schweißen und die Verstärkungsstrebe an dem Adhäsionsbereich der Kühlplatte (120; 220) gebildet ist.

4. Batteriemodul (100; 200) nach Anspruch 1, wobei die Verstärkungsstrebe (121(a), 121(b), 121(c), 121(d); 212(a), 212(b), 212(c), 212(d)) entlang eines Randbereichs der Kühlplatte befestigt ist.

5. Batteriemodul (100; 200) nach Anspruch 1, wobei ein Querschnitt der Verstärkungsstrebe (121(a), 121(b), 121(c), 121(d), 121(e); 212(a), 212(b), 212(c), 212(d)) eine H-förmige Strebenstruktur aufweist.

6. Batteriemodul (100; 200) nach Anspruch 1, wobei bei dem Schweißen das Modulgehäuse durch eine Lötverbindung an der Kühlplatte (120; 220) befestigt wird.

7. Batteriemodul (100; 200) nach Anspruch 1, wobei die wenigstens eine Batteriezelle (130; 230) in einer zu der Kühlplatte (120; 220) senkrechten Richtung ausgerichtet ist.

8. Batteriemodul (100) nach Anspruch 1, wobei das Modulgehäuse umfasst:
einen U-förmigen Rahmen (111), welcher eine Struktur aufweist, welche eine untere Fläche und entgegengesetzte Seitenflächen des Aufnahmeabschnitts abdeckt; und
eine obere Platte (112), welche eine obere Fläche des U-förmigen Rahmens (111) abdeckt.

9. Batteriemodul nach Anspruch 8, wobei das Modulgehäuse einen U-förmigen Rahmen (111) umfasst, welcher eine Struktur aufweist, welche eine untere Fläche und entgegengesetzte Seitenflächen des Aufnahmeabschnitts abdeckt, und
wobei die Kühlplatte (120) an einer äußeren Seite der unteren Fläche des U-förmigen Rahmens (111) befestigt ist.

10. Batteriemodul (200) nach Anspruch 1, wobei das Modulgehäuse umfasst:
eine untere Platte (212), welche eine untere Fläche des Aufnahmeabschnitts bildet; und
einen U-förmigen Rahmen (211), welcher eine Struktur aufweist, welche eine obere Fläche und beide Seitenflächen des Aufnahmeabschnitts abdeckt,
wobei die Kühlplatte (220) an einer äußeren Seite einer unteren Fläche der unteren Platte (212) befestigt ist.

11. Batteriemodul (100) nach Anspruch 8, wobei das Modulgehäuse ferner eine Endplatte umfasst, welche eine offene Seitenfläche des U-förmigen Rahmens (111) abdeckt.

12. Batteriepack, umfassend das Batteriemodul (100; 200) nach Anspruch 1.

## Revendications

1. Module de batterie (100 ; 200) comprenant :
au moins une cellule de batterie (130 ; 230) ;
un boîtier de module ayant une partie de réception pour y loger l'au moins une cellule de batterie (130 ; 230) ; et
une plaque de refroidissement (120 ; 220) formée sur un côté externe d'une surface du boîtier de module,
dans lequel le boîtier de module est fixé avec la plaque de refroidissement (120 ; 220) par soudage et une poutre de renfort (121(a), 121(b), 121(c), 121(d), 121(e) ; 212(a), 212(b), 212(c), 212(d)),
dans lequel la poutre de renfort (121(a), 121(b), 121(c), 121(d), 121(e) ; 212(a), 212(b), 212(c), 212(d)) pénètre dans une surface de chacun du boîtier de module et de la plaque de refroidissement (120 ; 220), et
dans lequel le soudage est réalisé par remplissage d'un espace vide entre la poutre de renfort (121(a), 121(b), 121(c), 121(d), 121(e) ; 212(a), 212(b), 212(c), 212(d)) et
chaque trou traversant du boîtier de module et de la plaque de refroidissement (120 ; 220).

2. Module de batterie (100 ; 200) selon la revendication 1, dans lequel la plaque de refroidissement (120 ; 220) présente une structure en forme de plaque ayant une structure flexible pour former un trajet de déplacement de fluide.

3. Module de batterie (100 ; 200) selon la revendication 1, dans lequel la plaque de refroidissement (120 ; 220) comporte un trajet de déplacement de fluide sur un côté interne en contact avec le boîtier de module,
dans lequel une surface périphérique externe sur un côté opposé d'une surface en contact avec le boîtier de module présente une structure flexible comportant une région de séparation espacée du boîtier de module, et une région d'adhérence fixée au boîtier de module, et
dans lequel la fixation par le soudage et la poutre de renfort est formée au niveau de la région d'adhérence de la plaque de refroidissement (120 ; 220).

4. Module de batterie (100 ; 200) selon la revendication 1, dans lequel la poutre de renfort (121(a), 121(b), 121(c), 121(d) ; 212(a), 212(b), 212(c), 212(d)) est fixée le long d'une région de bord de la plaque de refroidissement.

5. Module de batterie (100 ; 200) selon la revendication 1, dans lequel une section transversale de la poutre de renfort (121(a), 121(b), 121(c), 121(d), 121(e) ; 212(a), 212(b), 212(c), 212(d)) présente une structure de poutre en forme de H.

6. Module de batterie (100 ; 200) selon la revendication 1, dans lequel, lors du soudage, le boîtier de module est fixé avec la plaque de refroidissement (120 ; 220) par une brasure.

7. Module de batterie (100 ; 200) selon la revendication 1, dans lequel l'au moins une cellule de batterie (130 ; 230) est orientée dans une direction perpendiculaire à la plaque de refroidissement (120 ; 220).

8. Module de batterie (100) selon la revendication 1, dans lequel le boîtier de module comporte :
un cadre en forme de U (111) ayant une structure qui recouvre une surface inférieure et des surfaces latérales opposées de la partie de réception ; et
une plaque supérieure (112) qui recouvre une surface supérieure du cadre en forme de U (111).

9. Module de batterie selon la revendication 8, dans lequel le boîtier de module comporte un cadre en forme de U présentant (111) une structure qui recouvre une surface inférieure et des surfaces latérales opposées de la partie de réception, et
dans lequel la plaque de refroidissement (120) est fixée sur un côté externe de la surface inférieure du cadre en forme de U (111).

10. Module de batterie (200) selon la revendication 1, dans lequel le boîtier de module comporte :
une plaque inférieure (212) qui forme une surface inférieure de la partie de réception ; et
un cadre en forme de U (211) ayant une structure qui recouvre une surface supérieure et les deux surfaces latérales de la partie de réception,
dans lequel la plaque de refroidissement (220) est fixée sur un côté externe d'une surface inférieure de la plaque inférieure (212).

11. Module de batterie (100) selon la revendication 8, dans lequel le boîtier de module comporte en outre une plaque d'extrémité qui recouvre une surface latérale ouverte du cadre en forme de U (111).

12. Bloc-batterie comprenant le module de batterie (100 ; 200) selon la revendication 1.
